# EUROPÄISCHE PATENTSCHRIFT

(11) **EP 1 572 813 B1**
(45) Veröffentlichungstag und Bekanntmachung des Hinweises auf die Patenterteilung: **16.08.2006**
(21) Anmeldenummer: 03809327.4
(22) Anmeldetag: 24.10.2003
(51) Int. Cl.: C09D 1/00

(54) **WÄSSRIGE MINERALISCHE BESCHICHTUNGSMITTEL, SCHICHTEN AUF DEREN BASIS, IHRE HERSTELLUNG UND IHRE VERWENDUNG**
AQUEOUS MINERAL COATING AGENTS, COATINGS BASED THEREON, PRODUCTION AND USE THEREOF
AGENTS D'ENDUCTION MINERAUX AQUEUX, COUCHES PRODUITES A PARTIR DE CES DERNIERS, LEUR PRODUCTION ET LEUR UTILISATION

(30) Priorität: 24.10.2002 DE 10249661
(43) Veröffentlichungstag der Anmeldung: 14.09.2005
(73) Patentinhaber: Deutsche Amphibolin-Werke von Robert Murjahn Stiftung & Co. KG, 64372 Ober-Ramstadt (DE)
(72) Erfinder: HECHLER, Klaus, 64372 Ober-Ramstadt (DE); ROSSA, Jürgen, 64646 Heppenheim (DE); MÖBUS, Helmut, 67251 Freinsheim (DE); PTATSCHEK, Volker, 63773 Goldbach (DE); BISTER, Erhard, 64846 Gross-Zimmern (DE); BACHELIER, André, 64720 Michelstadt (DE)
(74) Vertreter: Pfenning, Meinig & Partner GbR
(86) Internationale Anmeldenummer: PCT/EP2003/011841
(87) Internationale Veröffentlichungsnummer: WO 2004/037931

(56) Entgegenhaltungen:
- EP-A- 0 457 516
- DE-A- 19 855 151
- US-A- 5 592 764
- DATABASE WPI Section Ch, Week 199811 Derwent Publications Ltd., London, GB; Class G02, AN 1998-119054 XP002267677 & RU 2 084 481 C (APPL SCI PROBLEMS INST), 20. Juli 1997 (1997-07-20)
- DATABASE WPI Section Ch, Week 197912 Derwent Publications Ltd., London, GB; Class F06, AN 1979-23223B XP002267678 & JP 54 021431 A (JANOME SEWING MACHINE CO LTD), 17. Februar 1979 (1979-02-17)
- DATABASE WPI Section Ch, Week 197731 Derwent Publications Ltd., London, GB; Class E19, AN 1977-54863Y XP002267679 & JP 52 073931 A (KANSAI PAINT CO LTD), 21. Juni 1977 (1977-06-21)

## Beschreibung

Gegenstand der Erfindung sind flüssige, absetzungsfreie mineralische wässrige Beschichtungsmittel, temperaturbeständige Schichten auf deren Basis, ein Verfahren zur Herstellung und ihre Verwendung.

An Beschichtungen für dampferzeugende Geräte, insbesondere für Bügeleisen, Inhalationsgeräte, Reinigungsgeräte, Luftbefeuchter, werden hohe Anforderungen gestellt. Insbesondere ist es wichtig, dass derartige Beschichtungen eine hohe Verdampfungsleistung aufweisen. Die Erzielung einer hoher Verdampfungsleistung ist allerdings nur schwer erreichbar, da aufgrund des Leidenfrost'schen Effektes bei heißen Oberflächen die Verdampfungsleistung sinkt. Die Ursache ist darin zu sehen, dass Wassertropfen, wenn sie auf eine heiße Oberfläche treffen, zu tanzen beginnen, weil die zwischen Wassertropfen und Unterlage bestehende Dampfschicht die Wärmezufuhr behindert.

Es hat deshalb nicht an Versuchen gefehlt, für derartige Anwendungsfälle, d.h. für Dampfkammerbeschichtungen, Verdampfungsförderer einzusetzen.

Dies kann sowohl mechanisch (z.B. durch Gewebe) oder aber auch durch eine gezielte ausgewählte Formulierung des Beschichtungsmittels erreicht werden.

Die EP-A-0 457 516 betrifft eine Binderzusammensetzung für feuerfeste und wasserabweisende Beschichtungen, die Wasserglas und Füllstoffe enthält.

Die DE 198 55 151 A1 beschreibt Formulierungen für Dampfkammerbeschichtungen aus einer hochreinen amorphen Kieselsäure in einer kolloidalen Lösung in Wasser mit Zusätzen aus Bariumsulfat, Aluminiumsilikathydrat, Magnesiumsilikathydrat und/oder 3-Glycidyloxypropyltrimethoxysilan. Solche Formulierungen sind nicht lagerungsstabil. Es hat sich jedoch nun in Versuchen gezeigt, dass eine Beschichtung entsprechend der DE 198 55 151 A1 weder eine ausreichende Schichtstabilität gegen Auswaschung mit destilliertem Wasser noch eine ausreichend hohe Verdampfungsleistung für einen Dauerbetrieb, insbesondere für Bügeleisen ermöglicht.

Ausgehend hiervon ist es deshalb die Aufgabe der vorliegenden Erfindung, ein wässriges Beschichtungssystem sowie eine Beschichtung anzugeben, die eine möglichst hohe Verdampfungsleistung aufweist und im Dauerbetrieb aufrechterhält. Das wässrige Beschichtungssystem soll zudem auf dem Substrat eine gute Haftung aufweisen. Eine weitere Aufgabe der Erfindung ist ein Verfahren zur Herstellung derartiger Schichten sowie dessen Verwendung anzugeben.

Die Aufgabe wird in Bezug auf das wässrige Beschichtungsmittel durch die kennzeichnenden Merkmale des Patentanspruches 1, in Bezug auf die Beschichtung durch die Merkmale des Anspruches 16 in Bezug auf das Herstellungsverfahren durch die Merkmale des Anspruchs 23 gelöst. Die Verwendung der Beschichtung ist in den Ansprüchen 25 und 26 angegeben. Die Unteransprüche zeigen vorteilhafte Weiterbildungen auf.

Erfindungsgemäß wird somit ein wässriges, mineralisches Beschichtungsmittel vorgeschlagen, das aus einem mineralischen Bindemittel, mineralischen Füllstoffen, Füllkörper und/oder Pigmenten sowie aus anorganische Salze als Ionendepot enthaltendem Wasser besteht. Die erfindungsgemäße Beschichtung enthält ferner wie an und für sich üblich, noch Additive.

Es hat sich nun gezeigt, dass eine Beschichtung, die mit dem erfindungsgemäßen Beschichtungsmittel hergestellt worden ist, nicht nur eine hervorragende Haftung auf Substraten sondern eine überdurchschnittlich hohe Verdampfungsleistung aufweist.

Der Kern der erfindungsgemäßen Lehre wird dabei in spezifischer Formulierung mit den Komponenten a) bis d) gesehen.

Insbesondere das anorganische Salze enthaltende Wasser (Komponente a)) ist in Verbindung mit den spezifischen Füllstoffen, Füllkörpern und/oder Pigmenten (Komponente b)) für die überlegenen Eigenschaften der mit diesen Mitteln hergestellten Schichten verantwortlich.

Erfindungsgemäß enthält das Beschichtungsmittel 5-50 Gew.-%, bevorzugt 5-25 Gew.-% einer Lösung anorganischer Salze in Wasser als Ionendepot (Komponente a)).

Für die Funktionsfähigkeit der Beschichtung ist es offensichtlich entscheidend, dass auch in der Beschichtung selbst noch ein Ionendepot vorhanden ist. Wenn Wasser in Form von Tropfen auf die Oberfläche auftritt, führt dies dazu, dass aus dem Ionendepot Ionen wieder herausgelöst werden. Bei der erfindungsgemäßen Beschichtung wird somit dafür Sorge getragen, dass auch während des längerfristigen Gebrauchs, d.h. bei einem andauernden Einsatz, nach wie vor eine genügend hohe Anzahl an Ionen vorhanden ist. Dies wirkt sich positiv auf die Verdampfungsleistung aus. Bei der Erfindung ist es dabei bevorzugt, wenn als Wasser relativ hartes Wasser eingesetzt wird, da dieses über einen hohen Anteil an Ionen verfügt.

Beim erfindungsgemäßen wässrigen Beschichtungsmittel ist es wesentlich, dass das anorganische Salz enthaltende Wasser eine Salzlösung mit einer Leitfähigkeit ≥ 20 *µ*S/cm ist. Bevorzugt enthält die Lösung mindestens einen Typ der Ionen der Elemente der I. bis VI. Hauptgruppe und/oder der I. bis VIII. Nebengruppe einschließlich der Lanthaniden. Besonders bevorzugte Beispiele sind Salze der folgenden Ionen: Li⁺, Na⁺, K⁺, Ag⁺, Mg²⁺, Ca²⁺, Sr²⁺, Ba²⁺, Al³⁺, In³⁺, Ce³⁺, Ti⁴⁺, Cu²⁺, Zn²⁺, Fe³⁺ und/oder Sn⁴⁺. Besonders bevorzugt ist es dabei, wenn das Salz ein Calcium-Magnesiumcarbonat, besonders bevorzugt Dolomit, ist.

Ein weiteres wesentliches Element der erfindungsgemäßen Formulierung sind die mineralischen Füllstoffe, Füllkörper und/oder Pigmente (Komponente b)). Gemäß der vorliegenden Erfindung ist es dabei bevorzugt, dass das erfindungsgemäße Beschichtungsmittel 5-50 Gew.-% dieser Stoffe enthält. Bevorzugt sind 20-45 Gew.-%, besonders bevorzugt 30-40 Gew.-% der Komponente b)). Bevorzugt handelt es sich hierbei um mineralische Füllstoffe, Füllkörper und/oder Pigmente, die ausgewählt sind aus natürlichen und/oder calzinierten und/oder synthetisch kristallinen und/oder amorphen Mineralien ausgewählt aus der Gruppe der Oxide, Hydroxide, Carbide, Carbonate, Silikate, Alumosilikate, Sulfide, Sulfite, Sulfate, Nitride, Nitrite, Nitrate, Phosphide, Phosphite, Phosphate, Halogenide, Boride und Borate der Elemente der I. bis IV. Hauptgruppe und/oder der I. bis VIII. Nebengruppe des Periodensystems. Vorteilhaft sind dabei auch die Lanthanide. Beispiele sind: TiO₂, SiO₂, Al₂O₃, ZnO, Al(OH)₃, MgCO₃, CaCO₃, SrCO₃, BaCO₃ und BaS0₄ und hierunter pyrogene und/oder gefällte Kieselsäuren, Diatomeenerden, Talkum, Glimmer, Kreide, Calcit, Quarz, Cristobalit, Rutil, Anatas, Zinkweiß, Schwerspat, Feldspat, Tonmineralien und/oder deren Mischungen.

Ganz besonders bevorzugt als mineralische Füllstoffe sind gemäß der vorliegenden Erfindung Tonminerale, bevorzugt calzinierte Tonminerale, besonders bevorzugt calzinierte Kaoline. Weiterhin haben sich natürliche Tonminerale als besonders bevorzugt natürliche Kaoline erwiesen, ganz besonders bevorzugt die Kaolintypen Chinaclay Polwhite, Speswhite und PoleStar.

Als mineralische Füllkörper kommen Pulver, poröse Gläser, Glasmehle, Glas- und Keramikkugeln, Glas- und Keramikhohlkugeln, Mineralfasern und/oder Glasfasern in Betracht.

Das erfindungsgemäße Beschichtungsmittel enthält ferner 10-80 Gew.-%, besonders bevorzugt 40-65 Gew.-% mineralische Bindemittel (Komponente c)). Hierbei können alle an und für sich aus dem Stand der Technik bekannten mineralischen Bindemittel eingesetzt werden. Bevorzugt ist es hierbei, wenn als mineralische Bindemittel wässrige kolloidale Lösungen von Oxiden, Hydroxiden, Hydraten, Carbonaten, Silikaten, Alumosilikaten, Sulfiden, Sulfaten, Phosphiden und Halogeniden der Elemente der II. bis IV. Hauptgruppe und/oder der I. bis VIII. Nebengruppe, einschließlich der Lanthanide, eingesetzt werden. Beispiele sind: TiO₂, SiO₂, Al₂O₃, CeO₂, ZnO, SnO₂, ZrO₂ AlO (OH), MgCO₃, CaCO₃, BaCO₃, ZnS, Cd₃P₂, AgCl, AgBr und BaSO₄. Besonders bevorzugt sind sauer, basisch oder neutral stabilisierte Kieselsole und/oder kolloidale Schichtsilikatsole und/oder Böhmitsole. Ganz besonders bevorzugt sind Wassergläser oder Lösungen davon.

Das Beschichtungsmittel nach der Erfindung enthält ferner noch Additive (Komponente d)) bevorzugt Rheologieadditive. Dabei handelt es sich um Stoffe, ausgewählt unter pyrogenen Kieselsäuren, Fällungskieselsäuren, pyrogenem Aluminiumoxid, Tonmineralien und/oder Schichtsilikaten, besonders bevorzugt Hectorite, Zeolithe und/oder Montmorillonite.

Bei den erfindungsgemäßen Beschichtungsmitteln ist besonders hervorzuheben, dass es keine flüchtigen organischen Substanzen enthalten müssen. Die erfindungsgemäßen Beschichtungsmittel zeichnen sich weiterhin dadurch aus, dass sie als Einkomponentenmaterial absetzungsfrei mindestens 1 Jahr lagerstabil vorliegen.

Die Erfindung betrifft weiterhin eine Beschichtung hergestellt mit einem wässrigen Beschichtungsmittel wie vorstehend beschrieben. Die Schichtdicke der erfindungsgemäßen Beschichtung liegt dabei im Bereich von 5-500 µm, bevorzugt bei 50-250 µm. Kennzeichen der Beschichtung nach der Erfindung ist, dass diese rissfrei auf metallischen, silikatischen, keramischen und Kunststoffuntergründen aufgebracht ist.

Die Beschichtung nach der Erfindung zeichnet sich weiterhin aus, dass sie porös, hydrophil und dampfdurchlässig ist. Die erfindungsgemäße Beschichtung ist ferner hydrolysestabil, verfärbungsfrei und abplatzungsfrei. Ein weiterer großer Vorteil der erfindungsgemäßen Beschichtung ist, dass diese temperaturbeständig bis 1000 °C, vorzugsweise bis 825 °C, besonders bevorzugt bis 450 °C ist.

Die Erfindung betrifft weiterhin ein Verfahren zur Herstellung einer Beschichtung wie vorstehend beschrieben. Gemäß der vorliegenden Erfindung wird dabei so vorgegangen, dass das Beschichtungsmaterial wie vorstehend erläutert, durch Rollen, Spritzen, Streichen, Tauchen oder Fluten auf ein Substrat aufgebracht wird. Als Substrate können dabei grundsätzlich alle metallischen, silikatischen, keramischen und Kunststoffsubstrate eingesetzt werden. Bevorzugt sind Aluminium und seine Legierungen. Beim erfindungsgemäßen Verfahren ist besonders hervorzuheben, dass eine Trocknung bereits bei Temperaturen von 5-400 °C, vorzugsweise bei 10-200 °C, besonders bevorzugt bei Raumtemperatur möglich ist. Im Stand der Technik erfolgt die Trocknung mineralischer Beschichtungen aus mineralischen Beschichtungsmitteln bei wesentlich höheren Temperaturen. Überraschenderweise führt die Trocknung nach dem erfindungsgemäßen Verfahren auch zu einer rissfreien, hydrophilen, porösen und dampfundurchlässigen Beschichtung, die zudem unter Einsatzbedingungen hydrolysestabil, verfärbungsfrei und abpaltzungsfrei ist. Die Beschichtung zeichnet sich darüber hinaus durch eine hohe Temperaturbeständigkeit bis 1000 °C, vorzugsweise bis 825 °C, besonders vorzugsweise bis 450 °C aus.

Aufgrund der ausgezeichneten Verdampfungsleistungen der mit dem erfindungsgemäßen Beschichtungsmaterial hergestellten Beschichtungen werden diese bevorzugt als Dampfkammerbeschichtung für dampferzeugende Geräte wie Bügeleisen, Inhalationsgeräte, Reinigungsgeräte und Luftbefeuchter eingesetzt.

Die Beschichtungen nach der Erfindung zeichnen sich insbesondere dadurch aus, dass sie auf heißen Oberflächen den Leidenfrost' schen Effekt unterbinden.

Die Erfindung wird nachfolgend anhand von fünf Beispielen näher erläutert.

### Beispiel 1:

Im Rührgefäß eines Hochleistungsdissolvers werden 60g des Silica-Kolloids Klebosol 30 N 12 vorgelegt und unter Rühren (ca. 1000 U/min) 1g der pyrogenen Kieselsäure Aerosil 200 zugegeben. Die Mischung wird anschließend ca. 5 Minuten nachgerührt, dann 11,6g einer Magnesiumchlorid-Lösung mit einer Leitfähigkeit 200 *µ*S/cm und 38g Aluminiumsilikates PoleStar 400 dazugegeben und mit dem Dissolver innerhalb 20 min intensiv vermischt. Man erhält ein niedrigviskoses, absetzungsstabiles und verarbeitungsfertiges Beschichtungsmittel.

### Beispiel 2:

Im Rührgefäß eines Hochleistungsdissolvers werden 45g des Silica-Kolloids Klebosol 20H12 vorgelegt und unter Rühren (ca. 1000 U/min) 1g des rheologischen Additivs Bentone EW zugegeben. Die Mischung wird anschließend ca. 10 Minuten nachgerührt, dann 5,3g einer Kupfersulfat-Lösung mit einer Leitfähigkeit von 1000 *µ*S/cm und 41 g des calcinierten Kaolins Calc. Clay PoleStar 200P dazugegeben und mit dem Dissolver innerhalb 20 min intensiv vermischt. Man erhält ein niedrigviskoses, absetzungsstabiles und verarbeitungsfertiges Beschichtungsmittel.

### Beispiel 3:

Im Rührgefäß eines Hochleistungsdissolvers werden 40g des Silica-Kolloids Klebosol 30N12 vorgelegt und unter Rühren (ca. 1000 U/min) 0,2g des rheologischen Additivs Bentone EW zugegeben. Die Mischung wird anschließend ca. 5 Minuten nachgerührt, dann 5,3g einer Calciumsulfat-Lösung mit einer Leitfähigkeit 100 µS/cm, 40g des Kaolins China-Clay Grade D und 0,5g Dolomit dazugegeben und mit dem Dissolver innerhalb 20 min intensiv vermischt. Man erhält ein niedrigviskoses, absetzungsstabiles und verarbeitungsfertiges Beschichtungsmittel.

### Beispiel 4:

Im Rührgefäß eines Hochleistungsdissolvers werden 50g einer mit 1% Phosphorsäure stabilisierten, wässrigen 15 %igen kolloidalen Disperal P2-Lösung vorgelegt und unter Rühren (ca. 1000 U/min) 50g Calc. Clay PoleStar 200P zugegeben. Die Mischung wird anschließend mit dem Dissolver innerhalb 20 min intensiv vermischt, dann mit 5,3g einer Magnesiumsulfat-Lösung mit einer Leitfähigkeit von 10.000 *µ*S/cm versetzt. Man erhält ein niedrigviskoses, absetzungsstabiles und verarbeitungsfertiges Beschichtungsmittel.

### Beispiel 5:

Das Beschichtungsmittel nach Beispiel 3 mit einer Viskosität von ca. 1000 mPas bei 100/s, wird durch Spritzauftrag in einer Mächtigkeit von 100-200 *µ*m auf kalte Aluminium-Druckgußbügeleisenschuhe aufgetragen. Nach Raumtemperaturtrocknung an der Luft werden die Schuhe auf 300 °C aufgeheizt und getestet: Tropfentest 30 h dest. Wasser: keine Abplatzungen oder Auswaschungen
Tropfentest 30 h Stadtwasser: keine Abplatzungen oder Verkalkungen oder Auswaschungen
Verdampfungsrate: 25 ml Wasser innerhalb 1 Sekunde.

## Patentansprüche

1. Wässriges Beschichtungsmittel auf mineralischer Basis enthaltend:
a) 5-50 Gew.-% anorganische Salze enthaltendes Wasser mit einer Leitfähigkeit ≥ 20 µS/cm,
b) 5 bis zu 50 Gew.-% mindestens eines mineralischen Füllstoffes, Füllkörpers und/oder Pigments,
c) 10-80 Gew.-% mindestens eines mineralischen Bindemittels,
d) 0,05-5 Gew.-% Additive.

2. Wässriges Beschichtungsmittel nach Anspruch 1, **dadurch gekennzeichnet, dass** die Salze ausgewählt sind aus Salzen der I. bis IV. Hauptgruppen und/oder der I. bis VIII. Nebengruppen des Periodensystems einschließlich der Lanthaniden, vorzugsweise von Li⁺, Na⁺, K⁺, Ag⁺, Mgz+, Ca²⁺, Sr²⁺ Ba²⁺ , Al³⁺ , In³⁺ , Ce³⁺ Ti⁴⁺, Cu²⁺ , Zn²⁺, Fe³⁺ und/oder Sn⁴⁺.

3. Wässriges Beschichtungsmittel nach Anspruch 2, **dadurch gekennzeichnet, dass** das Salz ein Calcium/Magnesiumcarbonat, bevorzugt Dolomit, ist.

4. Wässriges Beschichtungsmittel nach mindestens einem der Ansprüche 1 bis 3, **dadurch gekennzeichnet, dass** es sich bei den mineralischen Füllstoffen, Pigmenten oder Festkörpern (Komponente b)), um natürliche und/oder calzinierte und/oder synthetische kristalline und/oder amorphe Minerale ausgewählt aus der Gruppe der Oxide, Hydroxide, Carbide, Carbonate, Silikate, Alumosilikate, Sulfide, Sulfite, Sulfate, Nitride, Nitrite, Nitrate, Phosphide, Phosphite, Phosphate, Halogenide, Boride und Borate der Elemente der I.-IV. Hauptgruppen und/oder der I.-VIII. Nebengruppen des Mendelejewschen Periodensystems einschließlich der Lanthaniden handelt, bevorzugt Titandioxid, Siliziumdioxid, Aluminiumoxid, Aluminiumhydroxid, Magnesiumcarbonat, Calciumcarbonat, Strontiumcarbonat, Zinkoxid, Bariumcarbonat und Bariumsulfat.

5. Wässriges Beschichtungsmittel nach Anspruch 4, **dadurch gekennzeichnet, dass** die Füllstoffe, Pigmente oder Füllkörper ausgewählt sind aus pyrogenen und/oder gefällten Kieselsäuren, Diatomeenerden, Talkum, Glimmer, Kreide, Calcit, Quarz, Cristobalit, Rutil, Anatas, Zinkweiß, Schwerspat, Feldspat, Tonmineralien und/oder Mischungen hiervon.

6. Wässriges Beschichtungsmittel nach mindestens einem der Ansprüche 4 oder 5, **dadurch gekennzeichnet, dass** die Füllstoffe Tonmineralien, bevorzugt calzinierte Tonmineralien, besonders bevorzugt calzinierte Kaoline sind und hierunter wiederum bevorzugt calzinierte Kaoline PoleStar.

7. Wässriges Beschichtungsmittel nach mindestens einem der Ansprüche 4 bis 6, **dadurch gekennzeichnet, dass** die Füllstoffe natürliche Tonmineralien, bevorzugt natürliche Kaoline, besonders bevorzugt die Kaolintypen Chinaclay Polwhite und/oder Speswhite sind.

8. Wässriges Beschichtungsmittel nach Anspruch 4 bis 7, **dadurch gekennzeichnet, dass** es sich bei den mineralischen Füllkörpern um poröse Gläser, Glasmehle, Glas- und Keramikkugeln, Glas- und Keramikhohlkugeln, Mineralfasern und/oder Glasfasern handelt.

9. Wässriges Beschichtungssystem nach mindestens einem der Ansprüche 1 bis 8, **dadurch gekennzeichnet, dass** das mineralischen Bindemittel (Komponente c)) eine wässrige kolloiddisperse Lösung ist, ausgewählt aus Oxiden, Hydroxiden, Hydraten, Carbonaten, Silikaten, Alumosilikaten, Sulfiden, Sulfaten, Phosphiden und Halogeniden der Elemente der II. bis IV. Hauptgruppen und/oder der I. bis VIII. Nebengruppen des Mendelejewschen Periodensystems einschließlich der Lanthaniden, bevorzugt Titandioxid, Siliziumdioxid, Aluminiumiodid, Ceroxid, Zinnoxid, Zinkoxid, Zirkonoxid, Aluminiumhydroxid, Aluminiumoxyhydrat, Magnesiumcarbonat, Calciumcarbonat, Bariumcarbonat, Zinksulfid, Cadmiumphosphid, Silberchlorid, Silberbromid und Bariumsulfat.

10. Wässriges Beschichtungsmittel nach Anspruch 9, **dadurch gekennzeichnet, dass** die mineralischen Bindemittel sauer, neutral oder basisch stabilisierte Kieselsole und/oder kolloiddisperse Schichtsilikate und/oder Böhmite, besonders bevorzugt elektrostatisch stabilisierte Kieselsole und unter diesen ausgewählt solche mit NaOH-Stabilisierung, sind.

11. Wässriges Beschichtungsmittel nach Anspruch 9 oder 10, **dadurch gekennzeichnet, dass** das Bindemittel Wasserglas oder eine wässrige Lösung davon ist.

12. Wässriges Beschichtungsmittel nach mindestens einem der Ansprüche 1 bis 11, **dadurch gekennzeichnet, dass** die Additive (Komponente d)) Rheologieadditive sind, ausgewählt unter pyrogenen und/oder Fällungskieselsäuren, pyrogenem Aluminiumoxid Tonmineralien und/oder Schichtsilikaten, besonders vorzugsweise Zeolithe, Bentonite, Montmorillonite oder Hectorite.

13. Wässriges Beschichtungsmittel nach einem der Ansprüche 1 bis 12, **dadurch gekennzeichnet, dass** das Beschichtungsmittel keine flüchtigen organischen Substanzen enthält.

14. Wässriges Beschichtungsmittel nach einem der Ansprüche 1 bis 12, **dadurch gekennzeichnet, dass** das Beschichtungsmittel einkomponentig ist, absetzungsfrei und mindestens 1 Jahr lagerstabil ist.

15. Wässriges Beschichtungsmittel nach mindestens einem der Ansprüche 1 bis 14, **dadurch gekennzeichnet, dass** es absetzungsfrei mindestens 1 Jahr haltbar ist.

16. Beschichtung für dampferzeugende Geräte wie Bügeleisen, Inhalationsgeräte., Reinigungsgeräte, Luftbefeuchter usw., **dadurch gekennzeichnet, dass** die Beschichtung mit einem wässrigen Beschichtungsmittel nach mindestens einem der Ansprüche 1 bis 15 erhalten worden ist.

17. Beschichtung nach Anspruch 16, **dadurch gekennzeichnet, dass** sie eine Schichtdicke von 5-500 *µ*m, vorzugsweise 50-250 *µ*m aufweist.

18. Beschichtung nach Anspruch 16 oder 17, **dadurch gekennzeichnet, dass** sie auf metallischen, mineralischen, silikatischen und keramischen sowie auf Kunststoffuntergründen, bevorzugt auf Aluminium und seinen Legierungen aufgebracht ist.

19. Beschichtung nach mindestens einem der Ansprüche 16 bis 18, **dadurch gekennzeichnet, dass** sie rissfrei ist.

20. Beschichtung nach mindestens einem der Ansprüche 16 bis 19, **dadurch gekennzeichnet, dass** die Beschichtung temperaturbeständig bis 1000 °C, vorzugsweise bis 825 °C, besonders vorzugsweise bis 450 °C ist.

21. Beschichtung nach mindestens einem der Ansprüche 16 bis 20, **dadurch gekennzeichnet, dass** die Beschichtung hydrophil, porös und/oder dampfdurchlässig ist.

22. Beschichtung nach mindestens einem der Ansprüche 16 bis 21, **dadurch gekennzeichnet, dass** die Beschichtung unter Einsatzbedingungen hydrolysestabil, verfärbungsfrei und abplatzungsfrei ist.

23. Verfahren zur Herstellung einer Beschichtung nach mindestens einem der Ansprüche 16 bis 22, **dadurch gekennzeichnet, dass** das mineralische Beschichtungsmittel durch Rollen, Spritzen, Streichen, Tauchen oder Fluten aufgebracht und bei Temperaturen von 5 bis 400 °C getrocknet wird.

24. Verfahren nach Anspruch 23, **dadurch gekennzeichnet, dass** die Trocknung bei 10 bis 200 °C durchgeführt wird.

25. Verwendung des wässrigen Beschichtungsmittels nach mindestens einem der Ansprüche 1 bis 15 als Dampfkammerbeschichtung für dampferzeugende Geräte wie Bügeleisen, Inhalationsgeräte, Reinigungsgeräte oder Luftbefeuchter.

26. Verwendung des wässrigen Beschichtungsmittels nach mindestens einem der Ansprüche 1 bis 15 zur Beschichtung von Oberflächen zur Unterbindung des Leidenfrost'schen Effektes.

## Claims

1. An aqueous coating composition based on minerals containing:
to up to
a) 5-50 % by weight of water containing inorganic salts, with a conductivity ≥ 20 *µ*S/cm,
b) 5-50 % by weight of at least one mineral filler, filling body and/or pigment,
c) 10-80 % by weight of at least one mineral binding agent.
d) 0.05-5% by weight of additives.

2. An aqueous coating composition according to claim 1, **characterised in that** the salts are selected from salts of the I. to IV. main group and/or of the I. to VIII. subgroup of the periodic table including the lanthanoids, preferably from Li⁺, Na⁺, K⁺, Ag⁺, Mg²⁺, Ca²⁺, Sr²⁺, Ba²⁺, Al³⁺, In³⁺, Ce³⁺, Ti⁴⁺, CU²⁺, Zn²⁺, Fe³⁺ and/or Sn⁴⁺.

3. An aqueous coating composition according to claim 2, **characterised in that** the salt is a calcium/magnesium carbonate, preferably dolomite.

4. An aqueous coating composition according to at lest one of the claims 1 to 3, **characterised in that** with the mineral fillers, pigments or filling bodies (component b)), it is the case of natural and/or calcined and/or synthetically crystalline and/or amorphous minerals selected from the group of oxides, hydroxides, carbides, carbonates, silicates, alumo-silicates, sulphides, sulphites, sulphates, nitrides, nitrites, nitrates, phosphides, phosphites, phosphates, halogenides, borides and borates of the elements of the I. to IV. main group and/or of the I. to VIII. subgroups of the Mendeleev periodic table including the lanthanoids, preferably titanium dioxide, silicon dioxide, aluminium oxide, aluminium hydroxide, magnesium carbonate, calcium carbonate, strontium carbonate, zinc oxide, barium carbonate and barium sulphate.

5. An aqueous coating composition according to claim 4, **characterised in that** the fillers, pigments or filling bodies are selected from pryrogenic and/or precipitate silicic acids, diatom earths, talcum, mica, chalk, calcite, quartz, cristobalite, rutile, anatase, zinc white, heavy spar, feldspar, clay minerals and/or mixtures of these.

6. An aqueous coating composition according to at least one of the claims 4 or 5, **characterised in that** the fillers are clay minerals, preferably calcined clay minerals, particularly preferred calcined kaolins and among these in turn preferably calcined kaolins PoleStar.

7. An aqueous coating composition according to at least one of the claims 4 to 6, **characterised in that** the fillers are natural clay minerals, preferably natural kaolins, particularly preferred the kaolin types Chinaclay Polwhite and/or Speswhite.

8. An aqueous coating composition according to claims 4 to 7, **characterised in that** with the mineral filling bodies, it is the case of porous glasses, glass powders, glass and ceramic balls, glass and ceramic hollow balls, mineral fibres and/or glass fibres.

9. An aqueous coating system according to at least one of the claims 1 to 8, the mineral binding agent (component c)) is an aqueous colloid-disperse solution, selected from oxides, hydroxides, hydrates, carbonates, silicates, alumo-silicates, sulphides, sulphates, phosphides, halogenides of the elements of the II. to IV. main groups and/or of the I. to VIII. subgroups of the Medeleev periodic table including the lanthanoids, preferably titanium dioxide, silicon dioxide, aluminium oxide, cerium oxide, tin oxide, zinc oxide, zirconium oxide, aluminium hydroxide, aluminium oxyhydrate, magnesium carbonate, calcium carbonate, barium carbonate, zinc sulphide, cadmium phosphide, silver chloride, silver bromide and barium sulphate.

10. An aqueous coating composition according to claim 9, **characterised in that** the mineral binding agents are acid-stabilised, neutral-stabilised or basic(alkaline)-stabilised silica sols and/or colloid-disperse phyllosilicates and/or boehmites, particularly preferred electrostatically stabilised silica sols and amongst these are selected those with NaOH-stabilisation.

11. Aqueous coating composition according to claim 9 or 10, **characterized in that** the binding agent is water glass or an aqueous solution thereof.

12. Aqueous coating composition according to at least one of the claims 1 to 11, **characterised in that** the additives (component d)) are rheology additives, selected amid pryrogenic silicic acids and/or precipitate silicic acids, pryrogenic aluminium oxide, clay minerals and/or phyllosilicates, particularly preferred zeolites, bentonites, montmorillonites or hectorites.

13. An aqueous coating composition according to one of the claims 1 to 12, **characterised in that** the coating means contains no volatile organic substances.

14. An aqueous coating composition according to one of the claims 1 to 12, **characterized in that** the coating means is single-component, deposit-free and is stale in storage for at least one year.

15. An aqueous coating composition according to at least one of the claims 1 to 14, **characterised in that** it is durable deposit-free for at least one year.

16. A coating for steam-producing apparatus such as [smoothing] irons, inhalation apparatus, cleaning apparatus, air humidifiers etc., **characterised in that** the coating has been obtained with an aqueous coating composition according to one of the claims 1 to 15.

17. A coating according to claim 16, **characterised in that** it has a layer thickness of 5-500 *µ*m, preferably 50-250 *µ*m.

18. A coating according to claim 16 or 17, **characterised in that** it is deposited on metallic, mineral, silicate and ceramic as well as plastic undersurfaces, preferably an aluminium and its alloys.

19. A coating according to at least one of the claims 16 to 18, **characterised in that** it is crack-free.

20. A coating according to at least one of the claims 16 to 19, **characterised in that** the coating is temperature resistant up to 1000 °C, preferably up to 825 °C, particularly preferably up to 450 °C.

21. A coating according to at least one of the claims 16 to 20, **characterised in that** the coating is hydrophilic, porous and/or vapour-permeable.

22. A coating according to at least one of the claims 16 to 21, **characterised in that** the coating under the application conditions is hydrolysis-stable, discolouration-free and flaking-free.

23. A method for manufacturing a coating at according to at least one of the claims 16 to 22, **characterised in that** the mineral coating composition is deposited by way of rolling, spraying, brushing, immersing or flow coating and is dried at temperatures of 5 to 400 °C.

24. A method according to claim 23, **characterised in that** the drying is carried out at 10 to 200 °C, preferably at room temperature.

25. The use of the aqueous coating composition according to at least one of the claims 1 to 15 as a steam-chamber coating for steam-producing apparatus such as [smoothing] irons, inhalation apparatus, cleaning apparatus or air humidifiers.

26. The use of the aqueous coating composition according to at least one of the claims 1 to 15 for coating surfaces for preventing the Leidenfrost effect.

## Revendications

1. Composition aqueuse de revêtement à base minérale, contenant :
a) 5-50 % en poids d'eau contenant des sels inorganiques ayant une conductivité > 20 ilS/cm,
b) 5-50 % en poids d'au moins une charge minérale, un corps de charge minéral et/ou un pigment minéral,
c) 10-80 % en poids d'au moins un liant minéral,
d) 0,05-5 % en poids d'additifs.

2. Composition aqueuse de revêtement selon la revendication 1, **caractérisée en ce que** les sels sont choisis parmi les sels des éléments des éléments des groupes IA à IVA et/ou des groupes IB à VIIIB de la classification périodique, y compris des lanthanides, de préférence de Li⁺, Na⁺, K⁺, Ag⁺, Mg²⁺, Ca²⁺, Sr²+, Ba²⁺, Al³⁺, In³⁺, Ce³⁺, Ti⁴⁺, Cu²⁺, Ti⁴⁺, Cu²⁺ Zn²⁺, Fe³⁺ et/ou Sn⁴⁺.

3. Composition aqueuse de revêtement selon la revendication 2, **caractérisée en ce que** le sel est un carbonate de calcium/magnésium, la dolomite de préférence.

4. Composition aqueuse de revêtement selon au moins l'une des revendications 1 à 3, **caractérisée en ce que** les charges minérales, les pigments minéraux ou les solides minéraux [composant b)] sont des minéraux cristallins et/ou amorphes, naturels et/ou calcinés et/ou synthétiques choisis dans le groupe des oxydes, hydroxydes, carbures, carbonates, silicates, aluminosilicates, sulfures, sulfites, sulfates, nitrures, nitrites, nitrates, phosphures, phosphites, phosphates, halogénures, borures et borates des éléments des groupes IA à IVA et/ou des groupes IB à VIIIB de la classification périodique de Mendeleïev, y compris des lanthanides, de préférence le dioxyde de titane, le dioxyde de silicium, l'oxyde d'aluminium, l'hydroxyde d'aluminium, le carbonate de magnésium, le carbonate de calcium, le carbonate de strontium, l'oxyde de zinc, le carbonate de baryum et le sulfate de baryum.

5. Composition aqueuse de revêtement selon la revendication 4, **caractérisée en ce que** les charges, pigments ou corps de charge sont choisis parmi les acides siliciques pyrogénés et/ou précipités, les terres à diatomées, le talc, le mica, la craie, la calcite, le quartz, la cristobalite, le rutile, l'anatase, le blanc de zinc, la barytine, le feldspath, des minéraux argileux et/ou des mélanges de ceux-ci.

6. Composition aqueuse de revêtement selon au moins l'une des revendications 4 ou 5, **caractérisée en ce que** les charges sont des minéraux argileux, de préférence des minéraux argileux calcinés, de façon particulièrement préférée des kaolins calcinés, et parmi ceux-ci à leur tour de préférence des kaolins calcinés Polestar.

7. Composition aqueuse de revêtement selon au moins l'une des revendications 4 à 6, **caractérisée en ce que** les charges sont des minéraux argileux naturels, de préférence des kaolins naturels, de façon tout particulièrement préférée les types de kaolin Chinaclay Polwhite et/ou Speswhite.

8. Composition aqueuse de revêtement selon l'une quelconque des revendications 4 à 7, **caractérisée en ce que** les corps de charge minérales sont des verres poreux, des verres pulvérisés, des billes de verre et de céramique, des sphères creuses de verre et de céramique, des fibres minérales et/ou des fibres de verre.

9. Composition aqueuse de revêtement selon au moins l'une des revendications 1 à 8, **caractérisée en ce que** le liant minéral [composant c)] est une solution aqueuse en dispersion colloïdale choisie parmi les oxydes, hydroxydes, hydrates, carbonates, silicates, alumosilicates, sulfures, sulfates, phosphures et halogénures des éléments des groupes IIA à IVA et/ou des groupes IB à VIIIB de la classification périodique de Mendeleïev, y compris des lanthanides, de préférence de dioxyde de titane, dioxyde de silicium, iodure d'aluminium, oxyde de cérium, oxyde d'étain, oxyde de zinc, oxyde de zirconium, hydroxyde d'aluminium, oxyde d'aluminium hydraté, carbonate de magnésium, carbonate de calcium, carbonate de baryum, sulfure de zinc, phosphure de cadmium, chlorure d'argent, bromure d'argent et sulfate de baryum.

10. Composition aqueuse de revêtement selon la revendication 9, **caractérisée en ce que** les liants minéraux sont des boehmites et/ou des silicates lamellaires en dispersion colloïdale et/ou des sols de silice stabilisés par voie acide, neutre ou basique, de façon particulièrement préférée des sols de silice stabilisés par voie électrostatique et, choisis parmi ceux-ci, ceux stabilisés avec NaOH.

11. Composition aqueuse de revêtement selon la revendication 9 ou 10, **caractérisée en ce que** le liant est le verre soluble ou une solution aqueuse de celui-ci.

12. Composition aqueuse de revêtement selon au moins l'une des revendications 1 à 11, **caractérisée en ce que** les additifs [composant d)] sont des additifs de rhéologie choisis parmi des acides siliciques pyrogénés et/ou précipités, l'oxyde d'aluminium pyrogéné, des minéraux argileux et/ou des silicates lamellaires, de façon particulièrement préférée des zéolithes, bentonites, montmorillonites ou hectorites.

13. Composition aqueuse de revêtement selon l'une quelconque des revendications 1 à 12, **caractérisée en ce que** la composition de revêtement ne contient pas de substance organique volatile.

14. Composition aqueuse de revêtement selon l'une quelconque des revendications 1 à 12, **caractérisée en ce que** la composition de revêtement est monocomposant, ne forme pas de dépôt et est stable au stockage pendant au moins un an.

15. Composition aqueuse de revêtement selon au moins l'une des revendications 1 à 14, **caractérisée en ce qu'**elle peut être conserver sans dépôt pendant au moins un an.

16. Revêtement pour appareils générateurs de vapeur, tels que des fers à repasser, inhalateurs, appareils de nettoyage, humidificateurs d'air, etc. **caractérisé en ce que** le revêtement a été obtenu avec une composition aqueuse de revêtement selon au moins l'une des revendications 1 à 15.

17. Revêtement selon la revendication 16, **caractérisé en ce qu'**il présente une épaisseur de couche de 5-500 µm, de préférence de 50-250 µm.

18. Revêtement selon la revendication 16 ou 17, **caractérisé en ce qu'**il est appliqué sur des supports métalliques, minéraux, silicates et céramiques ainsi qu'en matière plastique, de préférence sur aluminium et ses alliages.

19. Revêtement selon au moins l'une des revendications 16 à 18, **caractérisé en ce qu'**il est sans fissures.

20. Revêtement selon au moins l'une des revendications 16 à 19, **caractérisé en ce que** le revêtement est résistant à la température jusqu'à 1 000 °C, de préférence jusqu'à 825 °C, de façon particulièrement préférée jusqu'à 450 °C.

21. Revêtement selon au moins l'une des revendications 16 à 20, **caractérisé en ce que** le revêtement est hydrophile, poreux et/ou perméable à la vapeur.

22. Revêtement selon au moins l'une des revendications 16 à 21, **caractérisé en ce que** le revêtement est stable à l'hydrolyse, sans changement de coloration et ne se détache pas dans les conditions d'utilisation.

23. Procédé pour la fabrication d'un revêtement selon au moins l'une des revendications 16 à 22, **caractérisé en ce que** la composition minérale de revêtement est appliquée par enduction au rouleau, au pistolet, enduction à la brosse, trempage ou enduction par ruissellement, et séchée à des températures de 5 à 400 °C.

24. Procédé selon la revendication 23, **caractérisé en ce que** le séchage est effectué à 10-200 °C.

25. Utilisation de la composition aqueuse de revêtement selon au moins l'une des revendications 1 à 15, en tant que revêtement pour appareils générateurs de vapeur, en particulier pour des fers à repasser, des inhalateurs, des appareils de nettoyage, ou des humidificateurs d'air.

26. Utilisation de la composition aqueuse de revêtement selon au moins l'une des revendications 1 à 15, pour le revêtement de surfaces visant à réprimer l'effet Leidenfrost.
